# EUROPEAN PATENT SPECIFICATION

(11) **EP 3 700 661 B1**
(45) Date of publication and mention of the grant of the patent: **03.08.2022**
(21) Application number: 17809006.4
(22) Date of filing: 27.10.2017
(51) Int. Cl.: B01D 63/12, B01D 65/00, C02F 1/44, F17C 13/00, F17C 1/00

(54) **HEAD FOR A PRESSURE VESSEL USED FOR MEMBRANE WATER TREATMENT**
KOPF FÜR EIN DRUCKGEFÄSS ZUR WASSERAUFBEREITUNG
TÊTE POUR UN RÉCIPIENT SOUS PRESSION UTILISÉ POUR LE TRAITEMENT DE L'EAU

(43) Date of publication of application: 02.09.2020
(73) Proprietor: UAB Nowadays Technologies, 46329 Kaunas (LT)
(72) Inventor: REDKO, Victor, LT-46329 Kaunas (LT); REDKO, Thomas, LT-46329 Kaunas (LT); VOGONIS, Gediminas, LT-46329 Kaunas (LT)
(74) Representative: Zaboliene, Reda
(86) International application number: PCT/IB2017/056680
(87) International publication number: WO 2019/081969

(56) References cited:
- EP-A1- 3 053 640
- WO-A1-2012/105835
- WO-A2-2006/110754
- US-A- 6 007 723
- US-A1- 2005 087 446

## Description

### FIELD OF THE INVENTION

The invention relates to the field of industrial water treatment plants, and, in particular, a new head for connecting said pressure vessels and other functions.

### DESCRIPTION OF THE RELATED ART

In Housings of industrial water treatment devices for removing impurities, filters (belonging to the category of pressure vessels) resembling pipes are connected in order to allow the fluid to flow from one housing to another. Ports, through which the filtered fluid flows, are formed at end parts and on side walls of the housing. Typically, in a port, there is a bushing which mechanically connects housings of different filters by pressing them with a special ring (a Victaulic connector).

This description provides a new solution when a special head of the housing resembling a cuboid is fastened to the end of the housing, which contains ports for the filtered fluid to flow. Separate housings are placed adjacent to each other, ports in heads are matched. Heads of housings are connected by screwing with bushings and nuts of special shape, which are placed in ports of the fluid.

The shape of the head of the housing resembling a cuboid allows to implement the port of larger than normal diameter. The technical solution of this invention allows housings to be placed closer to each other, which leads to reduction of the area and capacity of the entire filtration device. The structure of the head allows to easily replace the filtering element. Surfaces which are pressed by bushings and/ or nuts are flat, and have no curvatures, which could lead to water leakage. The connection of housings is implemented using fewer structural components. The manufacture of the head of the housing is not complicated; the head is made of a solid material.

The patent document EP1335162 (A2), published on August 13, 2003, provides a technical solution, when the side port is realized in the structural component of the housing, in a relief area, which can lead to the increase of the pressure withstood by the port (as the relief area allows to make wider edges of the port). In addition, the relief area can be flat, without curvatures, which leads to the reduction of the probability of water penetration, and leakage to the outside. However, for connection, a standard structure which prevents the capacity occupied by the filtration device from being reduced is used; the structure is made up of a larger number of components.

Moreover, Knappe Composites SAS uses a head of the housing in its Xtype series which is somewhat similar to that in this description, but the head of the said company must be removed completely in order to replace the filtering element (i.e., it is difficult to replace the filtering element). It is also quite complicated to manufacture the structure of this head (due to the heterogeneous material of the head); the head and the housing are not reinforced with a solid material, which leads to a greater probability of problems of tightness between the housing and the head. Document US 2005/087446 discloses a head for a pressure vessel according to the preamble of claim 1.

The listed solutions of the related art have the following deficiencies:
- the structure of interconnection of filter housings is complex, consisting of many components;
- housings are interconnected with large spacing between them, thus the entire filtration device occupies a large area, capacity;
- it is difficult to replace the filtration element;
- there is no possibility to make the port of larger than normal diameter connecting housings for the fluid to flow;
- it is difficult to manufacture the head of the housing;
- the housing and the head are less reliably interconnected than in the present invention, which leads to a probability of penetration of the fluid

This description provides a new technical solution that does not have the above mentioned deficiencies.

### SUMMARY OF THE INVENTION

This description provides a new structure for the head of the filter housing (pressure vessel). The head of the housing resembling a cuboid, rectangular parallelepiped is fastened on the end of the housing. The head has a port for replacing the filtering element, as well as ports allowing the filtered fluid to flow from one housing to another. The structure of the head allows to make the port of the filtered fluid of diameter larger than that of the related art. It is not necessary to remove the head in order to replace the filtering element. Thanks to a new structure of the head, filter housings can be placed closer to each other, and the entire filtration device occupies a smaller area, capacity. The housing and the head are reliably and tightly connected to each other during the manufacture of the housing. Heads are fastened to each other with bushings and/or nuts in the port for the fluid to flow, as well as additional fastening elements, which cover heads from the outside.

This description provides the structure of heads and the method of interconnecting heads.

### BRIEF DESCRIPTION OF THE DRAWINGS

Figure 1 is a cross section along the longitudinal axis of the head. There are shown two connected heads. (1) marks the most commonly used structural solution of the related art for connecting filter housings.
Figure 2 shows an isometric view of the cross section along the longitudinal axis of the head. There are shown two connected heads.
Figure 3 shows a fragment of the cross-section along the longitudinal axis of the coupling of the head. For connection, the bushing (6.1) without the nut is used, the bushing (6.1) is screwed into the thread formed in the edge of the head.
Figure 4 shows a fragment of the cross-section along the longitudinal axis of the connection of the head according to the other embodiment. For connection, the bushing (6.1) without the nut is used, the bushing (6.1) is screwed into the thread formed in the edge of the head.
Figure 5 shows a filtration device of two housings with heads. Heads are reinforced with additional fastening elements (12).

The presented figures are illustrative, scale, proportions and other aspects do not necessarily correspond to the actual technical solution.

### THE PREFFERED EMBODIMENTS

The present invention is disclosed in the apprended set of claims. Filters are used to remove impurities from the water. The structural solution presented in this description is best suited for industrial, high-flow filters or reverse osmosis installations. Such filters have the filter housing resembling a pipe, which can be about 8 inches (i.e., about 20 cm.) in diameter, although in addition to the said, one of the most commonly used sizes, there may be different sizes available. The end of the pipe-shaped housing is designed to be connected to other filter housings for the filtered fluid (hereinafter term "filtered fluid" refers to the fluid that has not necessarily yet been completely filtered but it is still being filtered) to flow and for other functions. In order that the filtered fluid could flow from one filter housing to another filter housing, filters can be connected by ports on their sides. The larger the diameter of the port, the higher performance of the filter, but the enlargement of the diameter is limited by the ability of the structure to withstand high pressures of the filtered fluid (the working pressure can be 8000 KPa (80 bar), but the structure must withstand the pressure which is several times higher). If the diameter of the side port is too large, the pressure can deform the structure forming the port. Considering that the filter housing described above operates at high internal pressures, this product category is classified as pressure vessels.

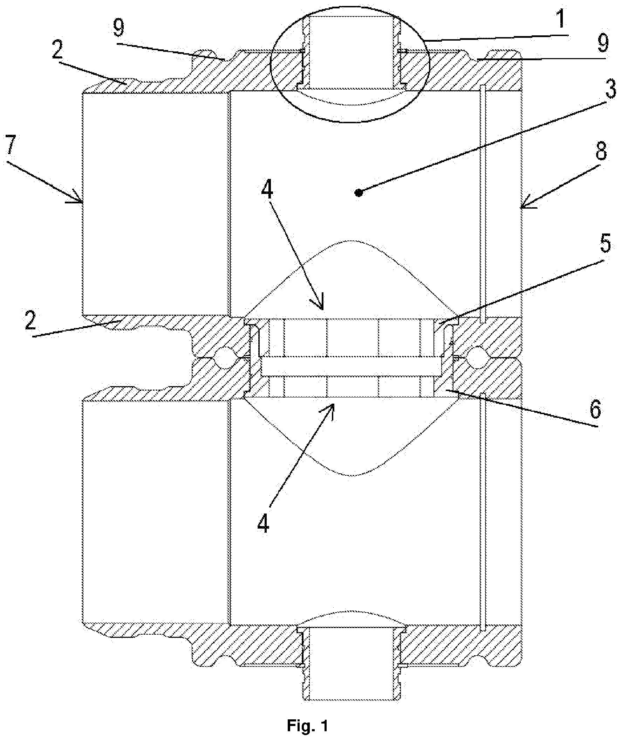

This description provides a technical solution, when the **head** fastened to ends of the housing (Fig. 1) improves the performance of the connection of housings, facilitates the process of connection of housings, and allows to manufacture a larger port for the fluid to flow between housings.

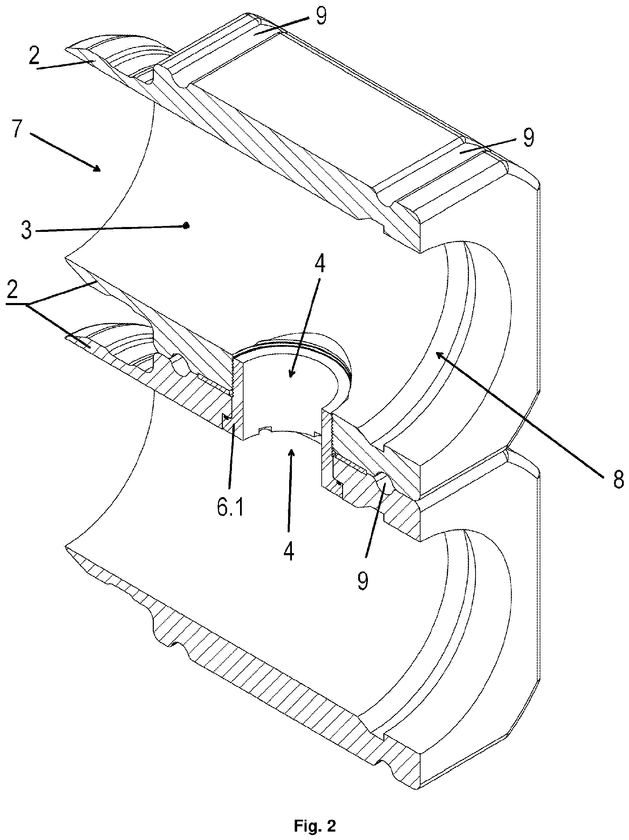

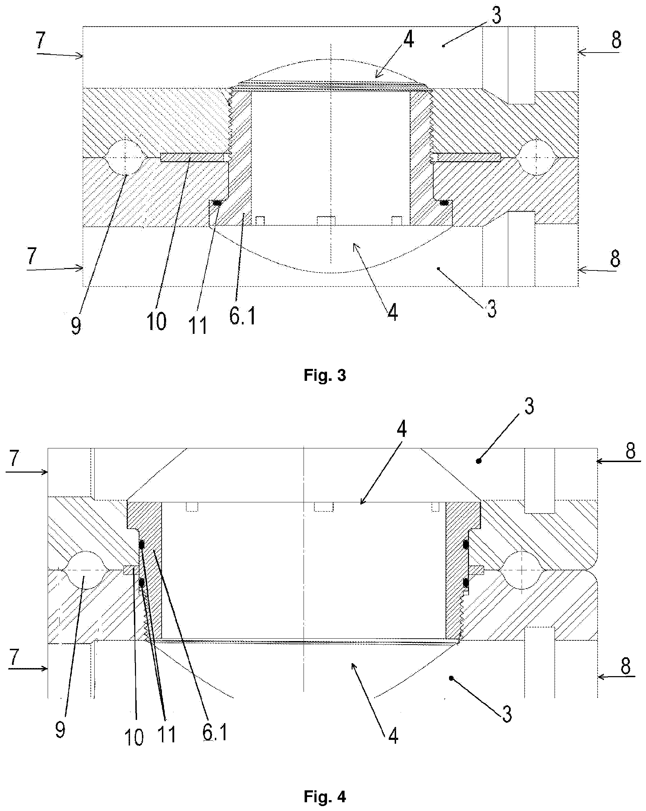

The head of the housing resembling a cuboid with a cylindrical cavity (3) (Fig. 2) inside parallel to the longitudinal axis of the housing,
has a coupling (2) for connecting the housing and the head,
has a port (8) for replacing the filtering element,
has ports (4) for the fluid to flow from one housing to another or in other directions
has fastening elements (5), (6), (6.1), (Fig. 3) (Fig. 4) in ports (4) of the fluid for fastening heads to each other.

On one side of the cuboid of the head, there is the **coupling** (2) for fastening, mounting the filter housing. The said coupling (2) for fastening the housing is an element resembling the shape of a pipe whose one end is seamlessly connected to the head (i.e., the coupling (2) is an integral part of the head), and the other end is open, free. In an other embodiment, outside walls of the said coupling (2) include grooves and elongated protrusions around the wall of the coupling (2) which increase adhesion of the coupling (2) and the housing. In one of the cases, the said coupling (2) is placed inside the housing, the outer diameter of the coupling (2) is smaller than the inner diameter of the housing. In other embodiments, the inner diameter of the coupling (2) may be larger than the outer diameter of the housing, in this case, the housing is inserted into the inside of the coupling (2), the coupling (2) is in the outside of the housing.

Inside the head, there is the **cylindrical cavity** (3), which has ports (7) and (8) in two planes of the head. The cavity (3) inside the head extends from the point, when the head (2) through the said coupling (2) is connected to the housing, to the opposite plane of the head, i.e., the cavity (3) extends over the entire head. On the opposite plane of the head than the coupling (2) for fastening the housing, there is the port (8) through which the filtering element, the membrane can be replaced. Typically, when the filter operates, this port (8) is tightly closed by a cover, which is fastened in a way as usual in such devices. The cover must tightly close the port (8) and withstand the pressure inside the housing.

The coupling (2) for mounting the housing and the port (8) for replacing the filtering element with the cover are in the planes crossed by the longitudinal axis of the housing. In other four planes which are perpendicular to said planes (in which there is the coupling (2) for mounting the housing and the port (8) for replacing the filtering element), there may be ports (4) through which the fluid can flow from one housing to another.

In planes of the head of the cuboid housing, located along the longitudinal axis of the housing, there may be **ports** (4) **for the fluid to flow** from one housing to another. Ports (4) may be in one or more planes. There may be one port (4) per plane in all four planes. Typically, the shape of the port (4) is a circle. In other embodiments, if necessary, more than one port (4) may be mounted in one plane.

The shape of the edge of the port (4) for the fluid is adapted to tightly fasten heads of the housing with each other. The port (4) for the fluid which is closer to the longitudinal axis of the head is of larger diameter. The edge away from the longitudinal axis of the head is suddenly transferred to an area of smaller diameter, i.e., a step formed in the edge is expanding trough the entire perimeter of the port (4). In other words, in the flat edge of the port (4), a rectangular groove with one side opening to the cylindrical cavity (3) of the head, is formed. The diameter of the port (4) behind the said step, behind the said groove is smaller than of the edge of the port (4). The edge of the port (4) may include recesses, grooves for sealing spacers to be placed.

Inside the port (4) for the fluid, the **fastening element of heads of the housing** which is designed to tightly connect two heads is placed. In one embodiment, the said fastening element is composed of two components, which are interconnected, threaded. The said fastening element consists of the bushing (6) with an inner thread and the nut (5) with an outer thread which is screwed with it. In other embodiments, the bushing (6) can be with an outer thread, and the nut (5) can be with the inner thread. The bushing (6) has an area of smaller diameter with a thread on which the nut (5) is screwed, an area of larger diameter, which rests on the line where the diameter of the edge of the port (4) decreases and restricts the movement of the head. The nut (5) has also a threaded area of smaller diameter, which is screwed onto the bushing (6), and an area of larger diameter which rests on the line where the diameter of the edge of the port (4) of the other head decreases. Areas of the bushing (6) and the nut (5) of larger diameter are of larger diameter than the area of the edge of the port (4) of the head of smaller diameter, but of smaller diameter than the area of the edge of the port (4) of the head, i.e., the area of the bushing (6) and the nut (5) of larger diameter fits into the area of larger diameter in the edge of the port (4), but it does not fit through the area of smaller diameter in the edge of the port (4).

In an other embodiment, the fastening element in the port (4) of the head for the fluid to flow may consist of one component, the bushing (6.1). In this case, one port (4) of one head is manufactured as described above, i.e., the edge of the port (4) is of two different diameters, the bushing (6.1) with an outer thread is placed into this port (4) of the head. The inner thread is manufactured in the port (4) of the other head. The bushing (6.1) is inserted through the port (4) of one head and screwed into the port (4) of the other head with the outer thread in the edge.

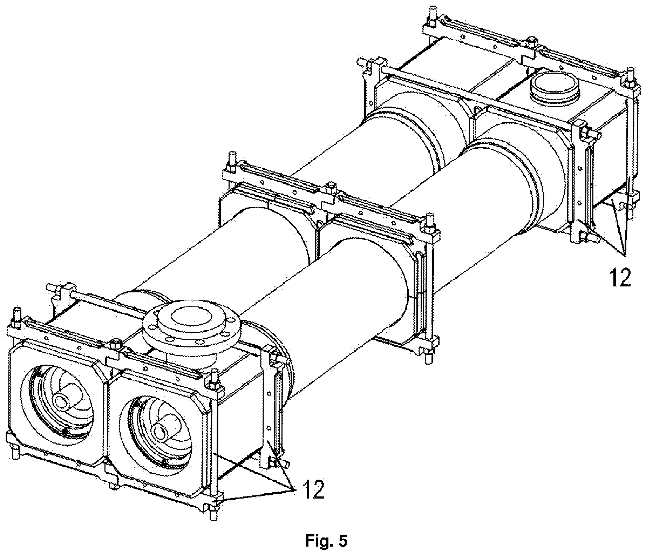

In the outside, in planes, the head of the housing has grooves (9) along the axis of the housing and perpendicular to the axis of the housing. Grooves (9) may be for placing threaded tie-bars, additional fastenings (12) (Fig. 5) of heads or for other purposes.

In the edge of the head and/or the bushing (6), (6.1), there are recesses containing various sealing elements, gaskets (10), (11).

The structure of the head of the housing allows to use both usual related art housing connection solutions (1) and new ones provided in this description. Both types of connection solutions can be used in one filtration device.

In the case of the related art, ports are mounted on the side wall of the housing, which forms the side wall of the housing, which is convex. In the case of the present invention, the port (4) is formed in a flat plane without curvatures, in this way the port (4) is framed by a larger, thicker layer of the material, so that the port (4) can be made larger than of the related art. For example, in a pipe of 20.32 cm (8") diameter with an internal pressure of up to 40000kPa (400bar), only 7.62 cm (3") ports can be mounted using the existing technology, and in the case of this invention, the diameter of the port (4) can be enlarged up to 10.16 cm (4") (Fig. 3). If the pressure is lower (for example, up to 6000kPa (60 bar)) the port (4) of the diameter of up to 15.24 cm (6") can be mounted (Fig. 4). The structure of the head with the port (4) of that size will withstand the required pressure.

In the case of the present invention, the head of the housing is made of epoxy materials (for example, various vinyls, polyesters) with reinforcement materials. In other embodiments, the head of the housing can be manufactured using the SMC/BMC or other technologies. Key requirements for materials and manufacturing technology: the manufactured housing must withstand an internal pressure of up to 40000kPa (400 bars), materials of the housing must be suitable for use in contact with food, and the housing must be corrosion-resistant.

The head is connected with the filter housing by wrapping glass (or other materials) impregnated with epoxy resin, i.e., during the manufacture of the housing. Heads are fastened to ends of a mould on which the material forming the housing will be wrapped; when forming the housing, the wrapping material is wrapped on the mould forming the housing and on couplings (2) of the head at the same time. Heads are fastened with the housing during the manufacture. In this case, the head is firmly and reliably connected to the housing. The manufactured housing with heads is connected to the filtration device with both ends of the housing (Fig. 5).

The filtration device is formed of two or more filter housings with heads. Ports (4) of heads of two housings are matched, the threaded bushing (6) is inserted through the port (4) of one head, and an area of the bushing (6) of larger diameter encloses the area of the edge of smaller diameter. The nut (5) is inserted through the port (4) of the other head, which is screwed on the threaded area of the bushing (6). The nut (5) with the bushing (6) are screwed until the bushing (6) and the nut (5) press edges of ports of two heads of the housing, i.e., press one head to the other. In an other embodiment, when only the bushing (6.1) is used, it is inserted through the port (4) of the head for the fluid, an area of the bushing (6.1) of larger diameter rests on the line where the diameter of the edge decreases, the other area of the bushing (6.1) is screwed into the port (4) for the fluid in the other housing, i.e., into the thread in the edge in the port (4). In this way, two heads are fastened, and tightness between them is ensured. In other embodiments, additional sealing gaskets (10), (11) may be used together with the threaded bushing (6) and the nut (5) or using only the bushing (6.1) screwed into the edge of the head.

Heads of several housings are additionally reinforced with additional fastening elements (12) (Fig. 5), which enclose heads of housings on their outside.

In order to illustrate and describe the invention, the description of the most suitable embodiments is presented above. This is not a detailed or restrictive description to determine the exact form or embodiment. The above description should be viewed more as illustration, not as a restriction. It is obvious that specialists in this field can have many modifications and variations. The embodiment is chosen and described in order to best understand the principles of the present invention and their best practical application for the various embodiments with different modifications suitable for a specific use or implementation adaptation. It is intended that the scope of the invention is defined by the claims added to it and its equivalents, in which all of these definitions have meaning within the broadest limits, unless otherwise stated.

In the embodiments described by those skilled in the art, modifications may be made without deviating from the scope of this invention as defined in the following claims .

## Claims

1. A head for a pressure vessel used for water treatment resembling a cuboid and having ports (4) for a fluid to flow from one filter housing ressembling a pipe to another or in other directions, the head is fastened to the end of the filter housing, said head is connected with the pressure vessel and has a filtering element,
**characterized in that** the head has:
a coupling (2) for connecting the pressure vessel and the head;
a port (8) for replacing the filtering element;
fastening elements in ports (4) of the fluid for fastening heads to each other;
a cylindrical cavity (3) in the inner part of the pressure vessel parallel to the longitudinal axis of the pressure vessel, said cavity (3) opens ports (7), (8) at each end of the head, and the ports (7), (8) are used for replacing the filtering element;
the head is **characterized in that** it is connected with the pressure vessel during the manufacture of the housing, when the housing is manufactured by a reinforcement material impregnated with epoxy resin by wrapping, the wrapping material is wrapped on a mould forming the housing and on couplings (2) of the head at the same time.

2. The head for a pressure vessel used for water treatment according to claim 1, **characterized in that** the fastening elements of the port (4) for the fluid comprise a bushing (6) and a nut (5), which are interconnectable to tightly fasten heads to each other.

3. The head for a pressure vessel used for water treatment according to claim 1, **characterized in that** the fastening elements of the port (4) for the fluid comprise a bushing (6.1) which is screwed into a thread in the edge of the port (4) of the head for the fluid to tightly fasten heads to each other, and several heads of several housings are additionally reinforced with additional fastening elements (12) and grooves (9) which enclose heads of housings on their outside.

4. Heads for a pressure vessel used for water treatment according to claim 2, **characterized in that** heads are connected by the bushing (6) placed in ports (4) of the fluid which is screwed with the nut (5) and both of these screwed elements press heads to each other.

5. Heads for a pressure vessel used for water treatment according to claim 2, **characterized in that** heads are connected by the bushing (6.1) placed in ports (4) of the fluid which is screwed into the thread in the port of the other head, the bushing (6.1) screwed into the thread presses heads to each other.

## Patentansprüche

1. Kopfstück für einen zur Wasseraufbereitung verwendeten Druckbehälter, der einem Quader ähnelt und Öffnungen (4) aufweist, damit eine Flüssigkeit von einem rohrförmigen Filtergehäuse zu einem anderen Gehäuse oder in andere Richtungen fließen kann, wobei das Kopfstück am Ende des Filtergehäuses befestigt und mit dem Druckbehälter verbunden ist und ein Filterelement aufweist,
**dadurch gekennzeichnet, dass** das Kopfstück Folgendes aufweist:
eine Kupplung (2) zum Verbinden des Druckbehälters und des Kopfstücks;
eine Öffnung (8) zum Austausch des Filterelements;
Befestigungselemente an den Flüssigkeitsöffnungen (4), um die Kopfstücke aneinander zu befestigen;
einen zylindrischen Hohlraum (3) im inneren Teil des Druckbehälters parallel zur Längsachse des Druckbehälters,
wobei der Hohlraum (3) Öffnungen (7), (8) an jedem Ende des Kopfstücks aufweist und die Öffnungen (7 ), (8) zum Austausch des Filterelements dienen;
das Kopfstück ist **dadurch gekennzeichnet, dass** es während der Herstellung des Gehäuses mit dem Druckbehälter verbunden wird, wobei das Gehäuse durch Umwickeln mit einem mit Epoxidharz durchtränktem Verstärkungsmaterial hergestellt wird, wobei das Umwicklungsmaterial auf eine das Gehäuse bildende Form und auf Kupplungen (2) des Kopfstücks gleichzeitig gewickelt wird.

2. Kopfstück für einen zur Wasseraufbereitung verwendeten Druckbehälter nach Anspruch 1, **dadurch gekennzeichnet, dass** die Befestigungselemente der Flüssigkeitsöffnungen (4) eine Buchse (6) und eine Mutter (5) umfassen, die miteinander verbindbar sind, um die Kopfstücke fest miteinander zu verbinden.

3. Kopfstück für einen zur Wasseraufbereitung verwendeten Druckbehälter nach Anspruch 1, **dadurch gekennzeichnet, dass** die Befestigungselemente der Flüssigkeitsöffnungen (4) eine Buchse (6.1) umfassen, die in ein Gewinde im Rand der Öffnung (4) des Kopfstücks für die Flüssigkeit eingeschraubt ist, um die Kopfstücke fest miteinander zu verbinden, und mehrere Köpfstücke mehrerer Gehäuse zusätzlich mit zusätzlichen Befestigungselementen (12) und Nuten (9) verstärkt sind, die die Köpfstücke der Gehäuse vom Außen umschließen.

4. Kopfstücke für einen zur Wasseraufbereitung verwendeten Druckbehälter nach Anspruch 2, **dadurch gekennzeichnet, dass** die Kopfstücke durch die in den Flüssigkeitsöffnungen (4) angeordnete Buchse (6) verbunden sind, die mit der Mutter (5) und diesen beiden Schraubelementen verschraubt ist, um die Kopfstücke aneinander zu drücken.

5. Kopfstücke für einen zur Wasseraufbereitung verwendeten Druckbehälter nach Anspruch 2, **dadurch gekennzeichnet, dass** die Kopfstücke durch die in den Flüssigkeitsöffnungen (4) angeordnete Buchse (6.1) verbunden sind, die in das Gewinde in der Öffnung des anderen Kopfstückes eingeschraubt ist, wobei die in das Gewinde eingeschraubte Buchse (6.1) die Kopfstücke aneinander drückt.

## Revendications

1. Une tête pour un récipient sous pression utilisé pour le traitement de l'eau ressemblant à un cuboïde et ayant des orifices (4) pour qu'un fluide s'écoule d'un boîtier de filtre ressemblant à un tuyau vers un autre ou dans d'autres directions, la tête est fixée à l'extrémité du boîtier de filtre, ladite tête est reliée au récipient sous pression et comporte un élément filtrant,
**caractérisé par le fait que** la tête a :
un accouplement (2) pour relier le réservoir sous pression et la tête ;
un orifice (8) pour remplacer l'élément filtrant ;
des éléments de fixation dans les orifices (4) du fluide pour fixer les têtes les unes aux autres ;
une cavité cylindrique (3) dans la partie intérieure du récipient sous pression,
parallèle à l'axe longitudinal du récipient sous pression, ladite cavité (3) ouvre des orifices (7), (8) à chaque extrémité de la tête, et les orifices (7), (8) sont utilisés pour remplacer l'élément filtrant ;
la tête est **caractérisée par le fait qu'**elle est reliée au récipient sous pression lors de la fabrication du boîtier, lorsque le boîtier est fabriqué par un matériau de renforcement imprégné de résine époxy par enveloppement, le matériau d'emballage est enroulé en même temps sur un moule formant le boîtier et sur des accouplements (2) de la tête.

2. La tête pour un récipient sous pression utilisé pour le traitement de l'eau selon la revendication 1,
**caractérisée par le fait que** les éléments de fixation de l'orifice (4) pour le fluide comprennent une douille (6) et un écrou (5),

3. La tête pour un récipient sous pression utilisé pour le traitement de l'eau selon la revendication 1,
**caractérisée par le fait que** les éléments de fixation de l'orifice (4) pour le fluide comprennent une douille (6.1) qui est vissée dans un filetage du bord de l'orifice (4) de la tête pour permettre au fluide de fixer solidement les têtes entre elles, et plusieurs têtes de plusieurs boîtiers sont en outre renforcées par des éléments de fixation supplémentaires (12) et des rainures (9) qui entourent les têtes des boîtiers sur leur face extérieure.

4. Des têtes pour un récipient sous pression utilisé pour le traitement de l'eau selon la revendication 2, **caractérisée par le fait que** les têtes sont reliées par la douille (6) placée dans les orifices (4) du fluide qui est vissée avec l'écrou (5) et ces deux éléments vissés pressent les têtes l'une contre l'autre.

5. Des têtes pour un récipient sous pression utilisé pour le traitement de l'eau selon la revendication 2, **caractérisée par le fait que** les têtes sont reliées par la douille (6,1) placée dans les orifices (4) du fluide qui est vissée dans le filetage de l'orifice de l'autre tête, la douille (6.1) vissée dans le filetage presse les têtes l'une contre l'autre.
